# EUROPÄISCHE PATENTANMELDUNG

(11) **EP 4 378 752 A1**
(43) Veröffentlichungstag der Anmeldung: **05.06.2024**
(21) Anmeldenummer: 23206194.5
(22) Anmeldetag: 26.10.2023
(51) Int. Cl.: B60N 2/28, B60N 2/60

(54) **ABDECKUNG FÜR EINE BEFESTIGUNGSVORRICHTUNG UND FAHRZEUGSITZ**

(30) Priorität: 01.12.2022 DE 102022212990; 06.07.2023 DE 102023206422
(71) Anmelder: Adient US LLC, Plymouth, MI 48170 (US)
(72) Erfinder: VOGEL, Andrea, 50171 Kerpen (DE); SCHMIDT, Claudia, 50171 Kerpen (DE); BEDWIN, Andrew, 40764 Langenfeld (DE); LINDQVIST, Johan, 423 61 Torslanda (SE); CARLSSON, Stefan, 418 77 Göteborg (SE); OLDACH, Sven, 42857 Remscheid (DE); KARACSONYI, Tamas, 42781 Haan (DE)
(74) Vertreter: Liedtke & Partner Patentanwälte

(57) **Zusammenfassung**

Abdeckung (220, 2200, 2220) für eine Befestigungsvorrichtung (121) für einen Kindersitz (118) an einem Fahrzeugsitz (100), wobei die Abdeckung (220, 2200, 2220) als eine dreidimensional geformte Bezugsleiste (226.1, 226.2) ausgebildet ist, welche mindestens zwei Durchgangsöffnungen (222) für die Befestigungsvorrichtung (121) aufweist. Des Weiteren betrifft die Offenbarung einen Fahrzeugsitz (100) mit einer solchen Abdeckung (220, 2200, 2220).

## Beschreibung

Die Erfindung betrifft eine Abdeckung für eine Befestigungsvorrichtung eines Kindersitzes an einem Fahrzeugsitz sowie einen Fahrzeugsitz mit einer solchen Abdeckung für die Befestigungsvorrichtung.

### Stand der Technik

Aus dem Stand der Technik sind Befestigungsvorrichtungen zur Befestigung eines Kindersitzes an einem Fahrzeugsitz bekannt. Bei einer sogenannten vorderen ISOFIX-Befestigungsvorrichtung wirken zwei zumindest mittelbar mit dem Fahrzeugsitz verbundene Befestigungselemente mit zwei Befestigungsvorrichtungen, sogenannten Konnektoren, des Kindersitzes zusammen. Zusätzlich kann eine hintere Befestigungsvorrichtung für einen oberen Haltegurt des Kindersitzes vorgesehen sein.

Hierfür weist die Befestigungsvorrichtung die beiden Befestigungselemente auf, welche zueinander den gleichen Abstand wie die Konnektoren des Kindersitzes haben. Jedes Befestigungselement ist vorzugsweise als ein Bügel nach der ISOFIX-Norm ausgebildet und ist vorzugsweise aus einem mehrfach gebogenen Draht mit kreisrundem Querschnitt von näherungsweise konstantem Durchmesser gebildet.

Die DE 198 53 149 C1 offenbart einen Fahrzeugsitz, auf dem ein Kindersitz mittels einer Befestigungsvorrichtung anbringbar ist, welche am Fahrzeugsitz zwischen einem Sitzkissen und einer Rückenlehne angeordnet ist. Mittels einer Abdeckung ist die Befestigungsvorrichtung bei Nichtgebrauch abdeckbar. Die von der Befestigungsvorrichtung abgewandte Seite der Abdeckung bildet einen Teil der Sitzfläche des Fahrzeugsitzes.

### Aufgabe

Der Erfindung liegt die Aufgabe zu Grunde, eine Abdeckung der eingangs genannten Art zu verbessern, insbesondere zu vereinfachen sowie einen entsprechenden Fahrzeugsitz mit einer solchen verbesserten Abdeckung bereitzustellen.

### Lösung

Die erstgenannte Aufgabe wird erfindungsgemäß gelöst durch eine Abdeckung für eine Befestigungsvorrichtung eines Kindersitzes an einem Fahrzeugsitz mit den Merkmalen des Anspruchs 1. Die zweitgenannte Aufgabe wird erfindungsgemäß durch einen Fahrzeugsitz mit den Merkmalen des Anspruchs 8 gelöst.

Die erfindungsgemäße Abdeckung ist modular ausgebildet und umfasst eine Anzahl von Abdeckeinheiten. Eine erste Abdeckeinheit ist als eine dreidimensional geformte erste Bezugsblende oder erste Bezugsleiste für eine vordere Befestigungseinheit zur lösbaren Befestigung des Kindersitzes ausgebildet. Alternativ oder zusätzlich kann eine zweite Abdeckeinheit als eine dreidimensional geformte zweite Bezugsblende oder zweite Bezugsleiste für eine hintere Befestigungseinheit zur lösbaren Befestigung des Kindersitzes ausgebildet sein.

Die vordere Befestigungseinheit und/oder die hintere Befestigungseinheit sind mittels der zugehörigen Abdeckeinheiten in den Fahrzeugsitz integriert. Die zugehörige vordere Abdeckeinheit und/oder die zugehörige hintere Abdeckeinheit können gleichzeitig oder unabhängig voneinander und somit separat in den Fahrzeugsitz integriert sein.

Beispielsweise kann die vordere Befestigungseinheit als ein ortsfester Befestigungsbügel für einen lösbaren Sitzhaken, insbesondere für sogenannte ISOFIX-Konnektoren, ausgebildet sein. Die hintere Befestigungseinheit kann beispielsweise als eine ortsfeste Verankerung für eine flexible Gurtbefestigung, insbesondere einen oberen Haltegurt, zum Beispiel einen sogenannten oberen ISOFIX-Haltegurt, ausgebildet sein.

Die jeweilige als eine dreidimensional geformte Bezugsleiste oder Bezugsblende ausgebildete Abdeckung kann beispielsweise mindestens eine Durchgangsöffnung oder mehrere, beispielsweise zwei, Durchgangsöffnungen zu der Befestigungsvorrichtung an dem Fahrzeugsitz aufweisen. Unter einer dreidimensional geformten Bezugsblende oder Bezugsleiste wird insbesondere eine bezugsvorderseitig auf einem Sitzbezug und/oder einem Polsterelement aufliegende und mit diesem verbundene und eine Bezugsöffnung beziehungsweise eine Polsteröffnung teilweise umgreifende Blende verstanden, deren Durchgangsöffnung fluchtend zur Bezugsöffnung beziehungsweise Polsteröffnung angeordnet ist.

Beispielsweise kann die erste Abdeckeinheit für die vordere Befestigungseinheit zwei Durchgangsöffnungen aufweisen. Die zweite Abdeckeinheit für die hintere Befestigungseinheit kann beispielsweise eine Durchgangsöffnung für die hintere Befestigungseinheit aufweisen. Die jeweilige Abdeckeinheit kann zusätzlich oder alternativ eingerichtet sein, durch Wegbewegen, insbesondere Wegklappen nach oben oder unten einen Zugang für die vordere Befestigungseinheit freizugeben. In diesem Fall weist die jeweilige Abdeckeinheit keine Durchgangsöffnung auf.

Dadurch, dass die jeweilige Abdeckeinheit als mindestens eine dreidimensional geformte Bezugsleiste oder Blende (auch kurz 3D-Abdeckung oder 3D-Formung genannt) ausgebildet ist, kann diese in einen Bezug eingenäht oder mit einem Bezug oder einer Verkleidung für den Fahrzeugsitz vernäht oder auf andere Weise befestigt, insbesondere gesteckt, werden.

Eine Außenseite der jeweils dreidimensional geformten Bezugsleiste kann beispielsweise als eine Zierfläche oder zumindest teilweise dekorativ ausgebildet sein. Eine Innenseite der dreidimensional geformten Bezugsleiste oder Blende kann beispielsweise als ein Trägerelement oder ein Befestigungselement ausgebildet sein. Alternativ oder zusätzlich kann oder können an der dreidimensional geformten Bezugsleiste oder Blende ein oder mehrere Befestigungselement/e, zum Beispiel Stecklaschen und/oder Nählaschen, vorgesehen sein.

Die jeweilige dreidimensional geformte Abdeckung oder die jeweilige dreidimensional geformte Bezugsleiste kann insbesondere aus einem dreidimensional verformbaren und/oder komprimierbaren und/oder verfestigbaren und/oder stabilisierbaren Material, insbesondere einem Fasermaterial, insbesondere aus einem Vliesstoff oder einem anderen geeigneten Kunststofffasermaterial, gebildet sein. Beispielsweise kann die dreidimensional geformte Abdeckung oder die dreidimensional geformte Bezugsleiste eine Materialstärke zwischen 1 mm und 5 mm, insbesondere zwischen 2 mm und 3 mm, aufweisen. Insbesondere kann die dreidimensional geformte Abdeckung oder die dreidimensional geformte Bezugsleiste eigensteif ausgebildet sein, insbesondere aus einem solchen Material gebildet sein und/oder eine solche Materialstärke aufweisen, dass diese Abdeckung oder Bezugsleiste eigensteif ausgebildet ist.

Durch eine derartige dreidimensional geformte Bezugsleiste oder Bezugsblende können Nahtlinien im Bezug reduziert und komplexe Bereiche der Verkleidung um die Befestigungsvorrichtung am Fahrzeugsitz, insbesondere um einen sogenannten ISOFIX-Halter (auch Top-Tether-Bügel genannt) oder eine ISOFIX-Befestigungsvorrichtung, vereinfacht werden.

Der Materialaufbau der Abdeckung kann mindestens einen 3D-verformbaren Vliesstoff oder ein ähnliches Material, insbesondere ein 3D-formbares Kunststoffmaterial, umfassen, das durch 3D-Verformung in seiner Materialstärke komprimiert und in einer 3D-Form stabilisiert wird. Zusätzlich können schmelzarme Fasern im Material enthalten sein.

Eine weitere Möglichkeit ist ein Materialaufbau mit einer oder mehreren Schichten, insbesondere mit Oberflächenschichten und/oder Trägerschichten, zum Beispiel aus zusätzlichem Oberflächenmaterial beziehungsweise Trägermaterial. In diesem Fall können die Oberflächenschichten mit einer Klebeschicht auf dem Trägermaterial fixiert sein. Die Klebeschicht kann auf einem Rohmaterial der Trägerschicht oder der Oberflächenschicht vorfixiert sein oder als separate Materialschicht ausgebildet sein. Alternativ kann die dreidimensional geformte Bezugsleiste nur aus einer einzigen Materialschicht, insbesondere aus einer Vliesmaterialschicht oder Kunststoffmaterialschicht, gebildet sein, die gleichzeitig die Außenseite und Innenseite bildet.

Ein erfindungsgemäßer Fahrzeugsitz umfasst die zuvor beschriebene Befestigungsvorrichtung mit mindestens einer Befestigungseinheit für einen Kindersitz und die zuvor beschriebene Abdeckung mit mindestens einer Abdeckeinheit. Die als dreidimensional geformte, insbesondere hinreichend eigensteife und bereichsweise flexibel ausgebildete, Bezugsleiste kann lösbar oder fest am Fahrzeugsitz befestigbar sein.

Beispielsweise kann der Fahrzeugsitz ein Polsterelement umfassen, welches eine Ausnehmung für die Befestigungsvorrichtung aufweist, wobei die Abdeckung derart auf dem Fahrzeugsitz anordenbar ist, dass die Durchgangsöffnung der Abdeckung, insbesondere der Bezugsleiste oder der Bezugsblende, und die Ausnehmung des Polsterelements übereinander liegen. Beispielsweise kann die Abdeckung lösbar fixierbar, insbesondere steckbar, ausgebildet sein. Alternativ oder zusätzlich kann die Abdeckung für eine feste Verbindung, zum Beispiel eine Nahtverbindung, ausgebildet sein.

Das Polsterelement kann beispielsweise von einem Sitzbezug überspannt oder überspannbar sein. Der Sitzbezug kann mindestens eine Ausnehmung aufweisen. Die Abdeckung kann beispielsweise die mindestens eine Öffnung des Sitzbezugs überdeckend an einer Unterseite des Sitzbezugs und/oder an dem Polsterelement befestigbar oder befestigt sein. Beispielsweises kann die Abdeckung mittels einer Stecklasche an dem Polsterelement lösbar befestigbar sein. Alternativ oder zusätzlich kann die Abdeckung mittels einer Nählasche mit dem Sitzbezug vernäht sein. Die Öffnung des Sitzbezugs kann komplementär zu einer Form und/oder Größe der Abdeckung ausgebildet sein. Alternativ kann der Sitzbezug eine Anzahl von Öffnungen aufweisen, die komplementär zu den Durchgangsöffnungen der Abdeckung ausgebildet sind. Beispielsweise kann der Sitzbezug eine Anzahl von Öffnungen aufweisen, die in Anzahl und Form mit den Durchgangsöffnungen der Abdeckung korrespondieren.

Die Befestigungsvorrichtung kann beispielsweise als mindestens ein ortsfester Befestigungsbügel, insbesondere ein U-förmiger Bügel, und/oder eine ortsfeste Verankerung ausgebildet sein. Je Kindersitz können zwei U-förmige Bügel als Befestigungsvorrichtung vorgesehen sein. Die Befestigungsvorrichtung kann an dem Polsterelement und/oder an einer Sitzstruktur und/oder einer Fahrzeugstruktur verankert, insbesondere fixiert, sein.

Beispielsweise können/kann der ortsfeste Befestigungsbügel und/oder die ortsfeste Verankerung eingerichtet sein, ein Gegenbefestigungsmittel des Kindersitzes lösbar zu befestigen. Das Gegenbefestigungsmittel kann beispielsweise eine untere Kindersitzbefestigung, insbesondere eine ISOFIX-Befestigungshaken, und/oder eine obere Kindersitzbefestigung, insbesondere ein ISOFIX-Haltegurt, sein. Beispielsweise kann die untere Kindersitzbefestigung mit der vorderen Befestigungseinheit zur Befestigung des Kindersitzes an dem Fahrzeugsitz koppelbar sein. Alternativ oder zusätzlich kann die obere Kindersitzbefestigung mit der hinteren Befestigungseinheit zur Befestigung des Kindersitzes an dem Fahrzeugsitz koppelbar sein.

Mittels der dreidimensional geformten Bezugsleiste zur Überdeckung der Befestigungsvorrichtung, insbesondere einer ISOFIX-Befestigungsvorrichtung zur Befestigung eines Kindersitzes am Fahrzeugsitz kann eine Polstereinheit des Fahrzeugsitzes insbesondere einen Bereich zwischen einem Rückenlehnenpolster und einem Sitzteilpolster oder einen unteren Bereich eines Rückenlehnenpolsters oder einen hinteren Bereich eines Sitzteilpolsters einfach abdecken und gleichzeitig einen Zugang zu der Befestigungsvorrichtung am Fahrzeugsitz ermöglichen. Die dreidimensional geformte Bezugsleiste für die ISOFIX-Befestigungsvorrichtung wird auch kurz 3D-geformter ISOFIX-Bezug oder 3D-geformte ISOFIX-Abdeckung genannt. Die dreidimensional geformte Bezugsleiste deckt insbesondere eine Schaumstoffstruktur und/oder eine Metallstruktur im hinteren Bereich des Rückenlehnenpolsters und/oder des Sitzteilpolsters bei gleichzeitigem Zugang zu ISOFIX-Stangen der ISOFIX-Befestigungsvorrichtung zur Befestigung des Kindersitzes ab. Die geschaffene Formdefinition der dreidimensional geformten Bezugsleiste ermöglicht den Zugang zu den ISOFIX-Stangen. Sie ermöglicht die Reduzierung oder Eliminierung von separaten Kunststoffabdeckungen für die ISOFIX-Befestigungsvorrichtungen.

Die dreidimensional geformte Bezugsleiste weist auf ihrer optional zumindest teilweise dekorativen Außenseite derartige Oberflächenmaterialien auf, die eine HF-Schweißtechnik zum Einprägen von beispielsweise Logos im gleichen Prozessschritt wie die 3D-Formung der Bezugsleiste ermöglichen. Die dreidimensional geformte Bezugsleiste kann in Längsausdehnung unterteilt sein. Insbesondere kann die dreidimensional geformte Bezugsleiste entsprechend der Breite von mehreren Rückenlehnen einer Sitzanordnung unterteilt sein. Dabei kann die dreidimensional geformte Bezugsleiste je nach Ausstattung der Rückenlehne mit ISOFIX-Befestigungsvorrichtung mindestens zwei Durchgangsöffnungen oder ein Vielfaches von zwei Durchgangsöffnungen umfassen. Zum Beispiel kann die ISOFIX-Abdeckung oder dreidimensional geformte Bezugsleiste auf verschiedene Arten geteilt werden, zum Beispiel als 40-60-Teilung einer Rückenlehne oder 40-20-40-Teilung einer Rückenlehne oder ähnliches.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung in teilweiser Explosionsdarstellung einen Fahrzeugsitz mit einer Längsverstelleinrichtung mit einer modularen Befestigungsvorrichtung für einen Kindersitz,
- Fig. 2:: in perspektivischer Darstellung schräg von vorne und von der Seite eine Sitzanordnung aus einer Sitzbank und mehreren geteilten Rückenlehnen, wobei zwischen Sitzbank und Rückenlehne eine Abdeckung für eine Befestigungsvorrichtung für einen Kindersitz angeordnet ist,
- Fig. 3:: in perspektivischer Darstellung die Abdeckung gemäß Figur 2 im Detail,
- Fig. 4:: in perspektivischer Darstellung schräg von vorne die Sitzanordnung nach Figur 2,
- Fig. 5:: schematisch in Ansicht von oben die Abdeckung gemäß Figur 2,
- Fig. 6:: schematisch in Ansicht von vorne die Abdeckung gemäß Figur 2,
- Fig. 7:: schematisch in Seitenansicht die Abdeckung gemäß Figur 2,
- Fig. 8:: schematisch in Seitenansicht ein weiteres Ausführungsbeispiel einer Abdeckung für eine Befestigungsvorrichtung,
- Fig. 9:: schematisch in Ansicht von hinten die Abdeckung gemäß Figur 8,
- Fig. 10:: schematisch in Seitenansicht ein Beispiel einer hinteren Abdeckeinheit für eine hintere/obere Kindersitzbefestigung, und
- Fig. 11: schematisch in Ansicht von hinten eine Rückenlehne eines Fahrzeugsitzes mit einer oberen Kindersitzbefestigung.

Einander entsprechende Teile sind in allen Figuren mit den gleichen Bezugszeichen versehen.

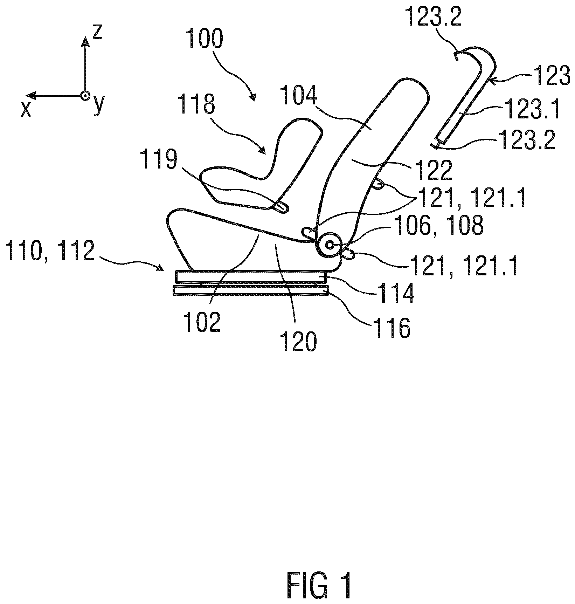

Ein in der Figur 1 zum schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeugs verbunden.

Auf dem Fahrzeugsitz 100 kann ein Kindersitz 118 mittels einer Befestigungsvorrichtung 121 anbringbar sein. Die Befestigungsvorrichtung 121 kann beispielsweise mehrere, insbesondere zwei, separate Befestigungseinheiten 121.1, 121.2 umfassen. Eine vordere Befestigungseinheit 121.1 ist eingerichtet, zur lösbaren Befestigung eines zugehörigen unteren Gegenbefestigungsmittels 119. Eine hintere Befestigungseinheit 121.2 ist eingerichtet, zur lösbaren Befestigung eines zugehörigen oberen Gegenbefestigungsmittels 123 des Kindersitzes 118.

Der Kindersitz 118 kann als unteres Gegenbefestigungsmittel 119 insbesondere eine Klaue oder einen Haken (auch ISOFIX-Konnektoren genannt), zur Anbringung und Fixierung an der Befestigungsvorrichtung 121, insbesondere an der vorderen Befestigungseinheit 121.1, umfassen, die an dem Fahrzeugsitz 100, insbesondere einer Sitzstruktur, wie einem Sitzrahmen, oder an einer Fahrzeugstruktur, vorgesehen ist. Zusätzlich oder alternativ kann der Kindersitz 118 als oberes Gegenbefestigungsmittel 123 einen oberen Haltegurt 123.1 umfassen, der an der hinteren Befestigungseinheit 121.2 an dem Fahrzeugsitz 100, insbesondere an der Sitzstruktur, zum Beispiel einem Sitzrahmen, oder an der Fahrzeugstruktur lösbar befestigbar ist.

Das obere Gegenbefestigungsmittel 123 ist als ein Haltegurt 123.1 ausgebildet, der an seinen Enden mit Haltemitteln 123.2, insbesondere Haken, versehen ist, die lösbar in die hintere Befestigungseinheit 121.2 und/oder an der Rückenlehne 104 befestigbar sind.

Die Befestigungsvorrichtung 121, insbesondere eine sogenannte ISOFIX-Befestigungsvorrichtung, wie zum Beispiel ein ortsfester Befestigungsbügel, wie ein U-förmiger Bügel, und/oder eine ortsfeste Verankerung, wie eine Hakenaufnahme, kann am Fahrzeugsitz 100 vorne und/oder hinten zwischen einem Sitzteilpolster 120 des Sitzteils 102 und einem Rückenlehnenpolster 122 der Rückenlehne 104 angeordnet sein.

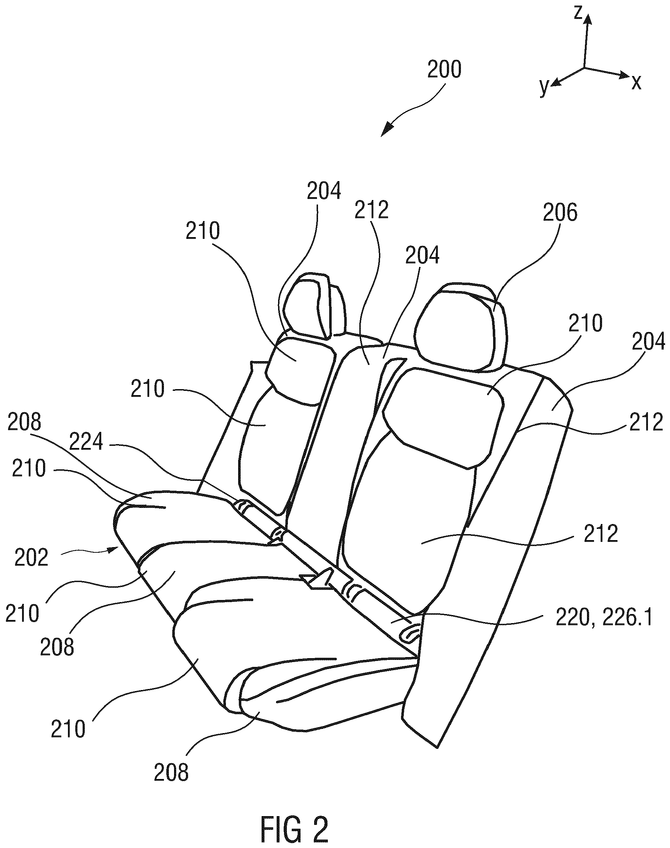

Figur 2 zeigt in perspektivischer Darstellung schräg von vorne und von der Seite eine Sitzanordnung 200 mit einer Sitzbank 202 und einer geteilten Rückenlehne 204. Die Sitzbank 202 kann als eine einteilige Sitzfläche ausgebildet sein. Alternativ kann die Sitzbank 202 auch in mehrere Sitzflächen unterteilt ausgebildet sein.

Die mehreren geteilten Rückenlehnen 204 können unterschiedlich breit oder gleich breit ausgebildet sein. Im gezeigten Beispiel weisen zwei äußere Rückenlehnen 204 eine gleiche Breite und eine mittlere Rückenlehne 204 eine geringere Breite auf. An den Rückenlehnen 204 kann jeweils eine Kopfstütze 206 angeordnet sein.

Zusätzlich können an einem Sitzteilpolster 208 der Sitzbank 202 und/oder an Rückenlehnenpolstern 212 der Rückenlehnen 204 entsprechend geformte Bezugskissen 210 (auch Polsterkissen genannt) angeordnet sein.

Zwischen der Sitzbank 202 und den Rückenlehnen 204, insbesondere zwischen deren Polster, ist eine erfindungsgemäße Abdeckung 220 für die, insbesondere bei Nichtbenutzung gewünschte nicht sichtbare, ISOFIX-Befestigungsvorrichtung 121 an der Sitzanordnung 200 angeordnet.

Die Abdeckung 220 kann sich beispielsweise über die gesamte Breite der Sitzanordnung 200 oder nur über Abschnitte, insbesondere nur über die Breite der Befestigungsvorrichtungen 121 in Querrichtung y, erstrecken. Die Abdeckung 220 kann dabei entsprechend der Breite der Rückenlehnen 204 unterteilt sein.

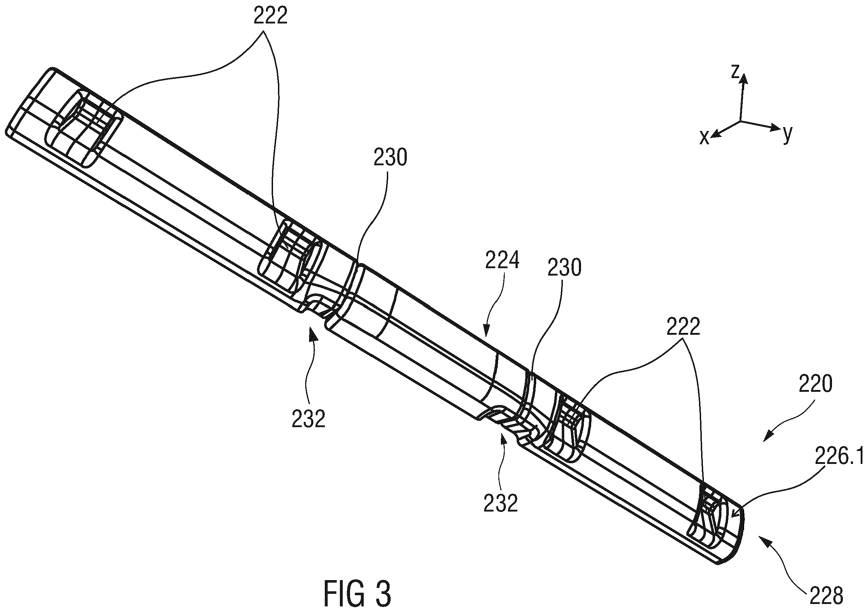

Mittels der Abdeckung 220 ist die ISOFIX-Befestigungsvorrichtung 121 derart abdeckbar, dass diese durch Durchgangsöffnungen 222 (dargestellt in Figur 3) und/oder durch manuelle Bedienung, insbesondere Wegbewegen, beispielsweise Wegklappen, der Abdeckung 220 nach oben oder unten oder zur Seite oder durch Entfernen der Abdeckung 220 weiterhin zugänglich ist.

Die von der ISOIX-Befestigungsvorrichtung 121 abgewandte Außenseite 224 der Abdeckung 220 bildet einen Teil der Sitzfläche des jeweiligen Fahrzeugsitzes 100 oder der Sitzanordnung 200 mit mehreren Sitzflächen.

Die Abdeckung 220 ist beispielsweise derart auf dem Fahrzeugsitz 100 anordenbar, dass die Durchgangsöffnung 222 der Abdeckung 220 und Ausnehmungen im Polsterelement oder ein Zwischenraum zwischen zwei Polsterelementen des Fahrzeugsitzes 100 übereinander liegen und durch diese hindurch die Befestigungsvorrichtung 121 von außen zum Befestigen des Kindersitzes 118 an dieser Befestigungsvorrichtung 121 zugänglich ist.

Figur 3 zeigt in perspektivischer Darstellung die Abdeckung 220 gemäß Figur 2 im Detail.

Die Abdeckung 220 ist als vordere oder erste Abdeckeinheit 220 (im Weiteren zur besseren Übersichtlichkeit vordere Abdeckeinheit 220 genannt) ausgebildet und umfasst eine zugehörige dreidimensional geformte vordere oder erste Bezugsleiste 226.1 (auch Bezugsblende genannt).

Die Außenseite 224 der vorderen Bezugsleiste 226.1 kann optional als eine Zierfläche ausgebildet sein. Die vordere Abdeckeinheit 220, insbesondere die vordere dreidimensional geformte Bezugsleiste 226.1, kann in ihrer Längsausdehnung auf der Außenseite 224 entsprechend der Breite der Rückenlehnen 204 unterteilt sein. Beispielsweise kann die einstückige vordere Abdeckeinheit 220 hierzu auf der Außenseite 224 mit Trennnuten 230 versehen sein.

Dabei kann die vordere dreidimensional geformte Bezugsleiste 226.1 je nach Ausstattung der Rückenlehnen 204 ohne oder mit ISOFIX-Befestigungsvorrichtung 121 (dargestellt in Figur 1) keine oder mindestens eine DurchgangsÖffnung 222 oder mehrere, beispielsweise zwei, Durchgangsöffnungen 222 (bei nur einer ISOFIX-Befestigungsvorrichtung 121) oder ein Vielfaches von zwei Durchgangsöffnungen 222 (bei mehreren ISOFIX-Befestigungsvorrichtungen 121) umfassen. Zum Beispiel kann die vordere ISOFIX-Abdeckeinheit 220 oder dreidimensional geformte vordere Bezugsleiste 226.1 auf verschiedene Arten mittels der Trennnuten 230 geteilt werden, zum Beispiel als 40-60-Teilung einer Rückenlehne 204 oder 40-20-40-Teilung einer Rückenlehne 204 oder ähnliches.

Dadurch, dass die vordere Abdeckeinheit 220 als dreidimensional geformte vordere Bezugsleiste 226.1 ausgebildet ist, kann diese in einen nicht näher dargestellten Bezug (auch Sitzbezug genannt) oder in das Sitzteilpolster 208 eingenäht oder mit einem solchen Bezug oder mit dem Sitzteilpolster 208 oder einer Verkleidung für den Fahrzeugsitz 100 oder der Sitzanordnung 200 vernäht oder auf andere Weise befestigt werden.

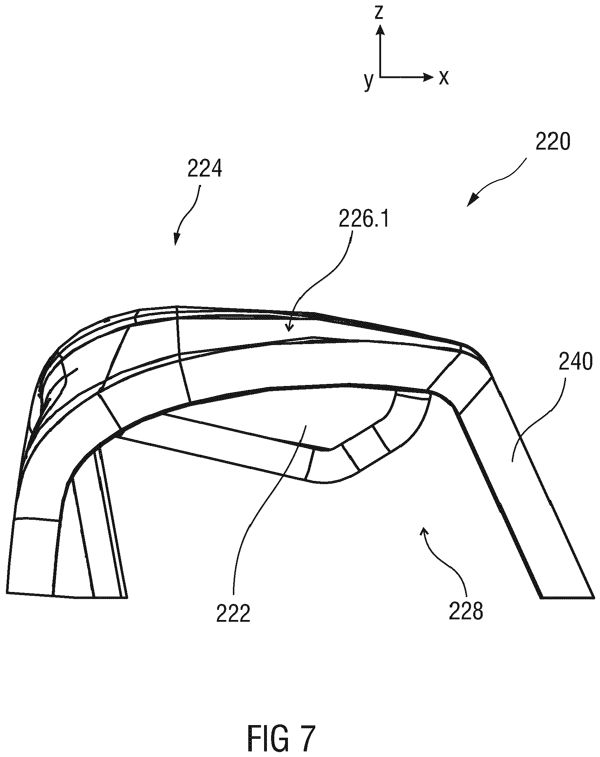

Eine Innenseite 228 (dargestellt in Figuren 7 bis 9) der dreidimensional geformten vorderen Bezugsleiste 226.1 kann beispielsweise als ein Trägerelement oder eine Befestigung ausgebildet sein.

Die dreidimensional geformte vordere Abdeckeinheit 220, insbesondere die dreidimensional geformte vordere Bezugsleiste 226.1, kann insbesondere aus einem dreidimensional verformbaren und/oder komprimierbaren und/oder verfestigbaren und/oder stabilisierbaren Material, insbesondere einem Fasermaterial, insbesondere aus einem Vliesstoff oder einem anderen geeigneten Kunststofffasermaterial, gebildet sein.

Der Materialaufbau der vorderen Abdeckeinheit 220 kann mindestens einen 3D-verformbaren Vliesstoff oder ein ähnliches Material umfassen, das durch 3D-Verformung in seiner Materialstärke komprimiert und in einer 3D-Form stabilisiert wird. Zusätzlich können schmelzarme Fasern im Material enthalten sein. Eine weitere Möglichkeit ist ein Materialaufbau mit einer oder mehreren Schichten, insbesondere mit Oberflächenschichten und/oder Trägerschichten, zum Beispiel aus zusätzlichem Oberflächenmaterial beziehungsweise Trägermaterial. In diesem Fall können die Oberflächenschichten mit einer Klebeschicht auf dem Trägermaterial fixiert sein. Die Klebeschicht kann auf einem Rohmaterial der Trägerschicht oder der Oberflächenschicht vorfixiert sein oder als separate Materialschicht ausgebildet sein.

Alternativ kann die dreidimensional geformte vordere Abdeckeinheit 220, insbesondere die dreidimensional geformte vordere Bezugsleiste 226.1, nur aus einer einzigen Materialschicht, insbesondere aus einer Vliesmaterialschicht, gebildet sein, die gleichzeitig die Außenseite 224 und die Innenseite 228 bildet.

Mittels der dreidimensional geformten vorderen Bezugsleiste 226.1 zur Überdeckung der Befestigungsvorrichtung 121, insbesondere der vorderen Befestigungseinheit 121.1 zur Befestigung des Kindersitzes 118 (dargestellt in Figur 1) am Fahrzeugsitz 100 oder an der Sitzanordnung 200 kann ein Bereich zwischen dem Rückenlehnenpolster 212 und dem Sitzteilpolster 208 oder ein unterer Bereich des Rückenlehnenpolsters 212 oder ein hinterer Bereich des Sitzteilpolsters 208 einfach abgedeckt werden und gleichzeitig einen Zugang zu der Befestigungsvorrichtung 121 am Fahrzeugsitz 100 oder der Sitzanordnung 200 ermöglichen.

Die vordere Abdeckeinheit 220 kann auch derart gestaltet sein, dass nur durch vorherige Manipulation (Klappen nach oben, unten oder Entfernen) die vordere Befestigungseinheit 121.1 erreicht werden kann - in dem Fall sind keine Durchgangsöffnungen 222 in der vorderen Bezugsleiste 226.1 vorgesehen.

Die geschaffene Formdefinition der dreidimensional geformten vorderen Bezugsleiste 226.1 ermöglicht den Zugang zu den ISOFIX-Stangen über die Durchgangsöffnungen 222.

Die dreidimensional geformte vordere Bezugsleiste 226.1 weist auf ihrer optional zumindest teilweise dekorativen Außenseite 224 derartige Oberflächenmaterialien auf, die eine HF-Schweißtechnik zum Einprägen von beispielsweise Logos im gleichen Prozessschritt mit der 3D-Formung der vorderen Bezugsleiste 226.1 ermöglichen.

Zusätzlich kann die vordere Bezugsleiste 226.1 Einformungen 232 oder Einschnitte oder keine Dimensionsveränderung, sondern nur ein Logo für die ISO-Fixbügel aufweisen. Die jeweiligen Einformungen 232 dienen insbesondere als Aufnahmen eines oder mehrerer nicht dargestellter Gurtschlösser der Sitzbank 202.

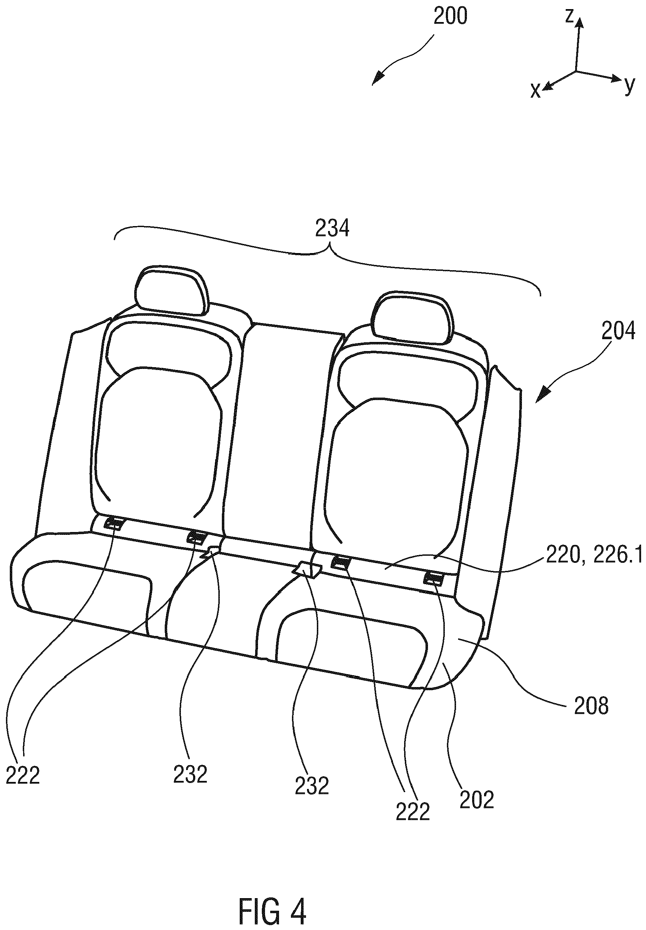

Figur 4 zeigt in perspektivischer Darstellung schräg von vorne die Sitzanordnung 200 nach Figur 2 mit der vorderen Abdeckeinheit 220 gemäß Figur 3 zwischen der Rückenlehne 204 und dem Sitzteilpolster 208.

Die vordere Abdeckeinheit 220 erstreckt sich bevorzugt über die gesamte Breite eines Sitzbereiches 234 der Sitzbank 202. Die vordere Abdeckeinheit 220 umfasst im gezeigten Ausführungsbeispiel vier Durchgangsöffnungen 222, jeweils zwei für eine Befestigungsvorrichtung 121 und zwei Einformungen 232 für Gurtschlösser der Sitzbank 202. Die vordere Abdeckeinheit 220 kann abhängig von der Ausführung des Sitzbereiches 234 mehr oder weniger Durchgangsöffnungen 222 und mehr oder weniger Einformungen 232 aufweisen.

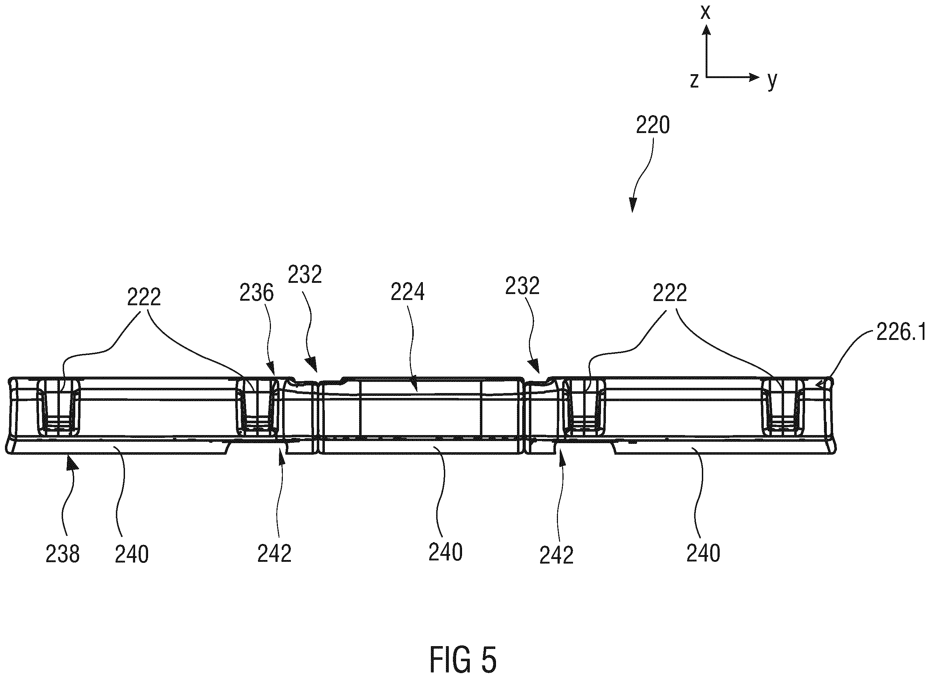

Figur 5 zeigt schematisch in Ansicht von oben die vordere Abdeckeinheit 220 gemäß Figur 2. Die vordere Abdeckeinheit 220 umfasst auf der Außenseite 224 jeweils ein Paar von Durchgangsöffnungen 222 für jeweils ein Paar von Befestigungsvorrichtungen 121, insbesondere vorderen Befestigungseinheiten 121.1, wie zum Beispiel U-förmigen Sicherheitsbügeln.

Die vordere Abdeckeinheit 220 umfasst an einer Kante 236, insbesondere einer unteren Kante, der Außenseite 224 die Einformungen 232 für die Gurtschlösser und an der gegenüberliegenden Kante 238, insbesondere einer oberen Kante, mindestens ein oder mehrere Befestigungselemente 240, insbesondere eine Nählasche. Das Befestigungselement 240 oder die Befestigungselemente 240 können von Ausschnitten 242 unterbrochen sein. Die Ausschnitte 242 dienen beispielsweise der Aufnahme von Lehnenverstellern der Rückenlehne 204.

Die Abdeckung 220 kann einen Zwischenraum zwischen dem Sitzteilpolster 208 und dem Rückenlehnenpolster 212 (dargestellt in Figur 2) überdecken. Die Abdeckung 220 kann beispielsweise mittels der Befestigungselemente 240 an einem Sitzbezug einer der Polsterelemente, des Rückenlehnenpolsters 212 oder des Sitzteilpolsters 208 befestigt, insbesondere mittels einer Verbindungsnaht verbunden, sein. Dabei kann das jeweilige Polsterelement beispielsweise von dem nicht dargestellten Sitzbezug überspannt oder überspannbar sein. Der Sitzbezug kann mindestens eine komplementäre Ausnehmung aufweisen. Die Abdeckung 220 kann beispielsweise die mindestens eine Öffnung des Sitzbezugs überdeckend an einer Unterseite des Sitzbezugs angeordnet, zum Beispiel mit diesem vernäht sein.

Der Fahrzeugsitz 100 kann alternativ ein Polsterelement, zum Beispiel das Sitzteilpolster 208 oder Rückenlehnenpolster 212 umfassen, welches eine nicht dargestellte Ausnehmung für die Befestigungsvorrichtung 121, insbesondere die vordere Befestigungseinheit 121.1 und/oder die hintere Befestigungseinheit 121.2, (dargestellt in Figur 1) aufweist. Die als vordere Bezugsleiste 226.1 ausgebildete vordere Abdeckeinheit 220 kann derart auf dem Fahrzeugsitz 100 anordenbar sein, dass die Durchgangsöffnung/en 222 der vorderen Abdeckeinheit 220 und die Ausnehmung des Polsterelements übereinander liegen. Alternativ oder zusätzlich kann die vordere Abdeckeinheit 220 lösbar fixierbar, insbesondere steckbar, ausgebildet sein.

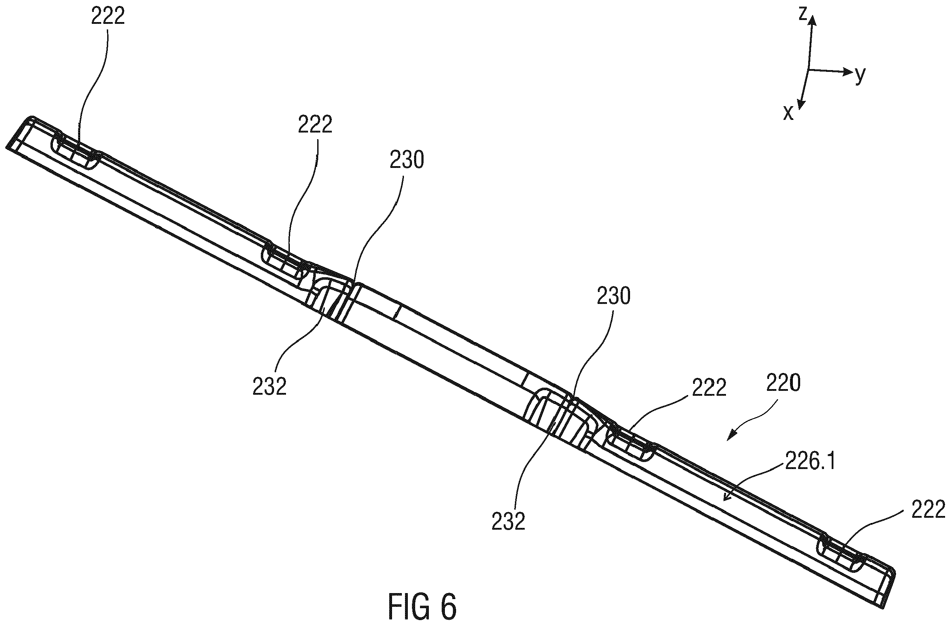

Figur 6 zeigt schematisch in Ansicht von vorne die als vordere Bezugsleiste 226.1 ausgebildete vordere Abdeckeinheit 220 gemäß Figur 2 mit den Durchgangsöffnungen 222 für die Befestigungsvorrichtungen 121, insbesondere für die vordere Befestigungseinheit 121.1 (dargestellt in Figur 1), den Einformungen 232 und den Trennnuten 230.

Figur 7 zeigt schematisch in Seitenansicht die als dreidimensional geformte vordere Bezugsleiste 226.1 ausgebildete vordere Abdeckeinheit 220 gemäß Figur 2. Die vordere Bezugsleiste 226.1 weist im Schnitt eine U-Form auf. Das beispielsweise als Nählasche ausgebildete Befestigungselement 240 bildet insbesondere eine von der Außenseite 224 abgewinkelte Seitenwand. Die Durchgangsöffnungen 222 sind beispielsweise als Durchgangsstege ausgebildet.

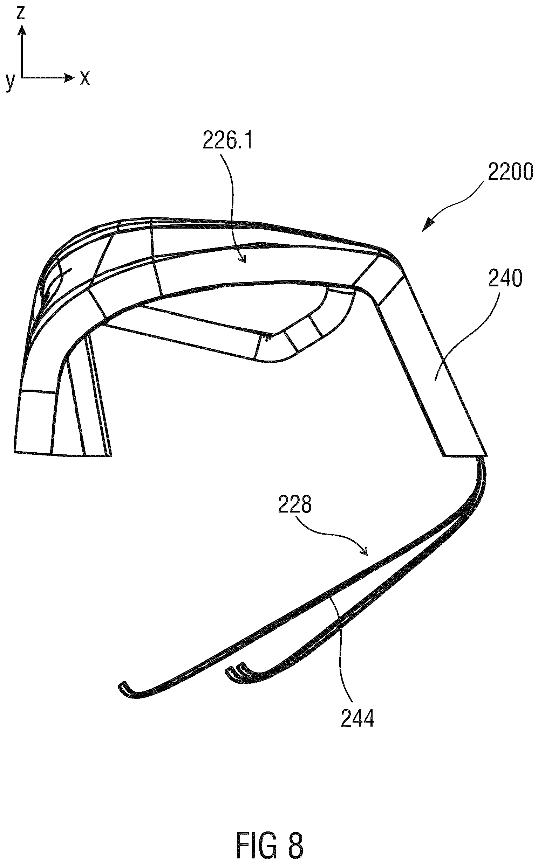

Figur 8 zeigt schematisch in Seitenansicht ein weiteres Ausführungsbeispiel einer Abdeckung 2200 für die Befestigungsvorrichtung 121, insbesondere die vordere Befestigungseinheit 121.1 (dargestellt in Figur 1). Die als dreidimensional geformte vordere Bezugsleiste 226.1 ausgebildete Abdeckung 2200 (auch vordere Abdeckeinheit 2200 bezeichnet) unterscheidet sich von der Abdeckung 220 nach Figuren 2 bis 7 nur in der Art der Befestigungselemente 240. Das Befestigungselement 240 kann zusätzlich eine zum Beispiel als Stecklasche ausgebildete Verlängerung 244 aufweisen. Die Verlängerung 244 kann aus einem anderen Material, insbesondere einem federnden Material, zum Beispiel einer Federzunge, ausgebildet sein. Die Verlängerung 244 ist in Figur 8 in verschiedenen Positionen dargestellt.

Die Abdeckung 2200 kann beispielsweise mittels der Stecklasche an dem Fahrzeugsitz 100, insbesondere in einem Zwischenraum zwischen dem Sitzteilpolster 208 und dem Rückenlehnenpolster 212 (dargestellt in Figur 2) lösbar befestigbar sein.

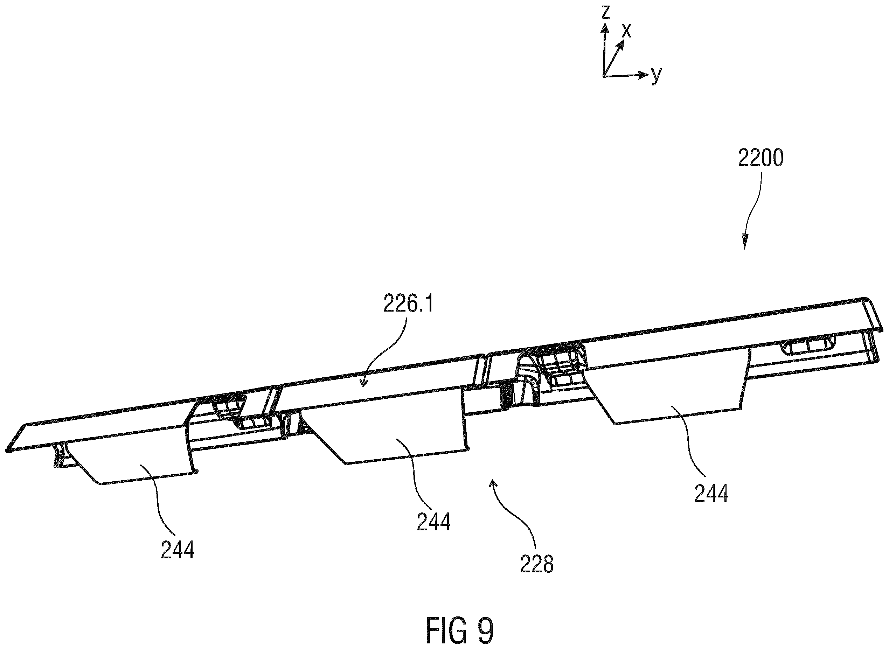

Figur 9 zeigt schematisch in Ansicht von hinten die Abdeckung 2200 gemäß Figur 8 mit den flexiblen Verlängerungen 244, die als Stecklaschen ausgebildet sind.

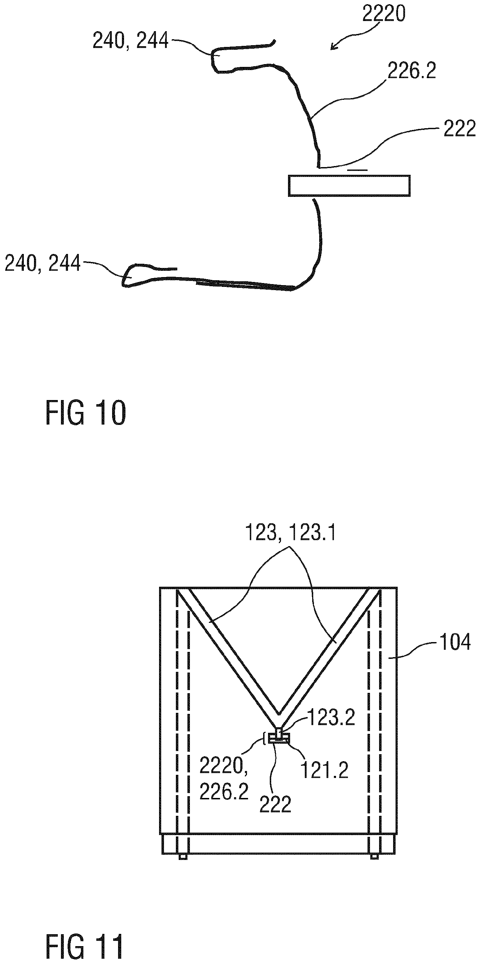

Figur 10 zeigt schematisch in Seitenansicht ein weiteres Beispiel einer als hintere Abdeckeinheit ausgebildete Abdeckung 2220 für eine hintere und/oder obere Kindersitzbefestigung. Die Abdeckung 2220 (auch als hintere Abdeckeinheit 2220 bezeichnet) ist hinsichtlich Material und Materialaufbau sowie 3D-Form analog zu den als vordere Abdeckeinheiten 220, 2200 ausgebildeten Abdeckungen 220 und 2200 gestaltet. Die hintere Abdeckung 2220 ist ebenfalls als eine dreidimensional geformte hintere Bezugsleiste 226.2 ausgebildet.

Die hintere Bezugsleiste 226.2 unterscheidet sich insbesondere in der Anzahl der Durchgangsöffnungen 222 und der Art der Befestigungselemente 240 zur Befestigung der Abdeckung 2220 am Fahrzeugsitz 100.

Die hintere Abdeckung 2220 umfasst eine einzelne Durchgangsöffnung 222 für das obere Gegenbefestigungsmittel 123, insbesondere für den oberen Haltegurt 123.1 (dargestellt in Figur 1).

Die hintere Bezugsleiste 226.2 kann als Befestigungselemente 240 beispielsweise integrierte Verlängerungen 244 aufweisen, die beispielsweise als Klammern, Rastklemmen, Federklemmen oder dergleichen ausgebildet sind.

Figur 11 zeigt schematisch in Ansicht von hinten die Rückenlehne 104 des Fahrzeugsitzes 100 mit einer als Haltegurt 123.1 ausgebildeten hinteren/oberen Kindersitzbefestigung. Der Haltegurt 123.1 kann einfach oder mehrfach an der Rückenlehne 104 befestigt sein. Der Haltegurt 123.1 kann über Kreuz, parallel und/oder mehrfach gebunden (gestrichelt dargestellt) an der Rückenlehne 104 befestigt sein.

Die dreidimensional geformte hintere Bezugsleiste 226.2 weist mittig die Durchgangsöffnung 222 für das Haltemittel 123.2, insbesondere einen Haken, eine Klemme oder dergleichen, des oberen Gegenbefestigungsmittels 123 auf. Der Haltegurt 123.1 kann an seinen freien Enden jeweils mit einem der Haltemittel 123.2 versehen sein.

Die hintere Bezugsleiste 226.2 kann als eine rahmenförmige Blende, insbesondere eine rechteckförmige Blende, ausgebildet sein. Die Bezugsleiste 226.2 kann als hintere Befestigungseinheit 121.2 einen Bolzen oder einen Stift, insbesondere einen Querbolzen oder einen Querstift, aufweisen, in welchen das hakenförmige Haltemittel 123.2 lösbar einhakt. Die Befestigungseinheit 121.2 wird mittels der rahmenförmig ausgestalteten Bezugsleiste 226.2 abgedeckt.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: erstes Schienenelement (Oberschiene)
- 116: zweites Schienenelement (Unterschiene)
- 118: Kindersitz
- 119: unteres Gegenbefestigungsmittel

- 120: Sitzteilpolster
- 121: Befestigungsvorrichtung
- 121.1: vordere/erste Befestigungseinheit
- 121.2: hintere/zweite Befestigungseinheit
- 122: Rückenlehnenpolster
- 123: oberes Gegenbefestigungsmittel
- 123.1: Haltegurt
- 123.2: Haltemittel

- 200: Sitzanordnung
- 202: Sitzbank
- 204: Rückenlehne
- 206: Kopfstütze
- 208: Sitzteilpolster
- 210: Bezugskissen
- 212: Rückenlehnenpolster
- 220, 2200: Abdeckung/vordere Abdeckeinheit
- 2220: Abdeckung/hintere Abdeckeinheit
- 222: Durchgangsöffnung
- 224: Außenseite
- 226.1: vordere/erste Bezugsleiste
- 226.2: hintere/zweite Bezugsleiste
- 228: Innenseite
- 230: Trennnut
- 232: Einformung
- 234: Sitzbereich
- 236: Kante
- 238: gegenüberliegende Kante
- 240: Befestigungselement
- 242: Ausschnitt
- 244: Verlängerung

- x: Längsrichtung
- y: Querrichtung
- z: Vertikalrichtung

## Patentansprüche

1. Abdeckung (220, 2200, 2220) für mindestens eine Befestigungsvorrichtung (121) für einen Kindersitz (118) an einem Fahrzeugsitz (100), wobei die Abdeckung (220, 2200, 2220) modular ausgebildet ist und eine Anzahl von Abdeckeinheiten (220, 2200, 2220) umfasst,
wobei eine erste Abdeckeinheit (220, 2200) als eine dreidimensional geformte erste Bezugsleiste (226.1) für eine vordere Befestigungseinheit (121.1) des Kindersitzes (118) ausgebildet ist und/oder eine zweite Abdeckeinheit (2220) als eine dreidimensional geformte zweite Bezugsleiste (226.2) für eine hintere Befestigungseinheit (121.2) des Kindersitzes (118) ausgebildet ist.

2. Abdeckung (220, 2200, 2220) nach Anspruch 1,
wobei die vordere Befestigungseinheit (121.1) als ein ortsfester Befestigungsbügel für einen lösbaren Sitzhaken ausgebildet ist und/oder die hintere Befestigungseinheit (121.2) als eine ortsfeste Verankerung für eine flexible Gurtbefestigung ausgebildet ist.

3. Abdeckung (220, 2200, 2220) nach Anspruch 1 oder 2,
wobei die jeweilige Bezugsleiste (226.1, 226.2) mindestens eine Durchgangsöffnung (222) für die zugehörige Befestigungseinheit (121.1, 121.2) aufweist.

4. Abdeckung (220, 2200, 2220) nach einem der vorhergehenden Ansprüche, wobei die jeweilige Bezugsleiste (226.1, 226.2) eine Außenseite (224), die als eine Zierfläche ausgebildet ist, und eine Innenseite (228) aufweist, an welcher mindestens ein Befestigungselement (240) vorgesehen ist.

5. Abdeckung (220, 2200, 2220) nach einem der vorhergehenden Ansprüche, wobei die jeweilige Bezugsleiste (226.1, 226.2) aus einem dreidimensional verformbaren Vliesstoff oder einem dreidimensional geformten Kunststoffmaterial gebildet ist.

6. Abdeckung (220, 2200, 2220) nach einem der vorhergehenden Ansprüche, wobei die jeweilige Bezugsleiste (226.1, 226.2) mehrere Materialschichten aufweist, wobei eine äußere Materialschicht eine Oberflächenschicht bildet und aus einem Oberflächenmaterial gebildet ist und eine innere Materialschicht eine Trägerschicht bildet und aus einem Trägermaterial gebildet ist, das verschieden vom Oberflächenmaterial ist.

7. Abdeckung (220, 2200, 2220) nach einem der Ansprüche 4 bis 6,
wobei das jeweilige Befestigungselement (240) als eine Nählasche und/oder Stecklasche ausgebildet ist.

8. Fahrzeugsitz (100) mit einer Befestigungsvorrichtung (121) für einen Kindersitz (118) und einer Abdeckung (220, 2200, 2220) nach einem der vorhergehenden Ansprüche.

9. Fahrzeugsitz (100) nach Anspruch 8, weiter umfassend mindestens ein Polsterelement, welches eine Ausnehmung für die Befestigungsvorrichtung (121) aufweist, wobei die Abdeckung (220, 2200, 2220) derart auf dem Fahrzeugsitz (100) anordenbar ist, dass die Durchgangsöffnung (222) der Abdeckung (220, 2200, 2220) und die Ausnehmung des Polsterelements übereinander liegen und durch diese hindurch die Befestigungsvorrichtung (121) von außen zum Befestigen des Kindersitzes (118) an dieser Befestigungsvorrichtung (121) zugänglich ist.

10. Fahrzeugsitz (100) nach Anspruch 8 oder 9, wobei das Polsterelement von einem Sitzbezug überspannt oder überspannbar ist und die Abdeckung (220, 2200, 2220) mindestens eine Öffnung des Sitzbezugs überdeckend an einer Unterseite des Sitzbezugs und/oder an dem Polsterelement befestigbar oder befestigt ist.

11. Fahrzeugsitz (100) nach Anspruch 9 oder 10, wobei der Sitzbezug eine Anzahl von Öffnungen aufweist, die in Anzahl und Form mit den Durchgangsöffnungen (222) der Abdeckung (220, 2200, 2220) korrespondieren.

12. Fahrzeugsitz (100) nach einem der Ansprüche 8 bis 11, wobei die Befestigungsvorrichtung (121) als mindestens ein ortsfester Befestigungsbügel, ein U-förmiger Bügel und/oder eine ortsfeste Verankerung ausgebildet ist.

13. Fahrzeugsitz (100) nach Anspruch 12, wobei der ortsfeste Befestigungsbügel und/oder die ortsfeste Verankerung eingerichtet sind beziehungsweise ist, ein Gegenbefestigungsmittel (119, 123) des Kindersitzes (118) lösbar zu befestigen.

14. Fahrzeugsitz (100) nach Anspruch 13, wobei das Gegenbefestigungsmittel (119, 123) eine untere Kindersitzbefestigung und/oder eine obere Kindersitzbefestigung ist.

15. Fahrzeugsitz (100) nach Anspruch 14, wobei die untere Kindersitzbefestigung mit der vorderen Befestigungseinheit (121.1) und/oder die obere Kindersitzbefestigung mit der hinteren Befestigungseinheit (121.2) koppelbar sind beziehungsweise ist.
